(19) Europäisches Patentamt
European Patent Office
Office européen des brevets

(11) **EP 4 335 545 A1**

(12) **EUROPEAN PATENT APPLICATION**

(43) Date of publication:
**13.03.2024   Bulletin 2024/11**

(21) Application number: **22194579.3**

(22) Date of filing: **08.09.2022**

(51) International Patent Classification (IPC):
***B01J 20/02*** *(2006.01)*

(52) Cooperative Patent Classification (CPC):
**B01J 20/02; B01D 53/02; B01J 20/18; B01J 20/22;
B01J 20/28028; B01J 20/28042; B01J 20/3085;
B33Y 80/00;** B01D 2253/108; B01D 2253/11;
B01D 2253/204; B01D 2253/306; B01D 2257/302;
B01D 2257/404; B01D 2257/708

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **VITO NV**
**2400 Mol (BE)**

(72) Inventors:
• **SUTENS, Ben**
  **2400 Mol (BE)**
• **MULLENS, Steven**
  **2400 Mol (BE)**
• **VANGENEUGDEN, Dirk**
  **2400 Mol (BE)**

(74) Representative: **AWA Benelux**
**AWA Benelux SA**
**Tour & Taxis - Royal Depot box:216**
**Havenlaan 86c Avenue du Port**
**1000 Bruxelles (BE)**

(54) **METHOD FOR PRODUCING A THREE-DIMENSIONAL POROUS SORBENT STRUCTURE**

(57)     The present invention relates to a method for producing a 3D porous sorbent structure, comprising building a 3D porous green body from a build material comprising an inorganic porous sorbent material and an organic binder material at least partially dissolved in a solvent, wherein the build material is deposited as filaments in a plurality of stacked layers to obtain the 3D porous green body, wherein at least some of the filaments within at least one of the plurality of layers are spaced apart from one another; inducing phase inversion of the 3D porous green body by exposing it to a non-solvent for the organic binder material, thereby obtaining a solidified 3D porous green body; drying the solidified 3D porous green body, thereby obtaining the 3D porous sorbent structure; wherein the build material comprises between 30 % and 70 % by weight of the inorganic porous sorbent material and between 5 % and 30 % by weight of the organic binder material, based on the total weight of the build material, the organic binder material is at least partially retained in the 3D porous sorbent structure, and the 3D porous sorbent structure has a sorbent accessibility of at least 40%, wherein the sorbent accessibility is calculated according to formula (I)

$$sorbent\ accessibility\ (\%) = 100 * \frac{S_{BET,structure}}{X * S_{BET,sorbent}} \qquad (I)$$

wherein $S_{BET,structure}$ is the BET surface area of the 3D porous sorbent structure, $S_{BET,sorbent}$ is the BET surface area of the initial inorganic porous sorbent material, X is the percentage in weight of the inorganic porous sorbent material, based on the total weight of the 3D porous sorbent structure, wherein the BET surface areas of the initial inorganic porous sorbent material and of the 3D porous sorbent structure are determined from argon adsorption isotherms at 87 K.

| det | mode | HV | mag | HW | WD | 20 µm |
| ETD | SE | 5.00 kV | 2 500 x | 50.8 µm | 6.2 mm | |

**FIG. 3A**

## Description

### Technical field

The present invention is related to a method for producing a three-dimensional porous sorbent structure. The present invention is further related to a three-dimensional porous sorbent structure, such as a three-dimensional porous sorbent structure obtained with methods of the invention.

### Background art

Gas separation and purification as well as catalysis have become a major part of the chemical and petrochemical industry. Therefore, extensive research is being performed to improve the efficiency and sustainability of currently existing technologies, as well as the development of new materials that can match these demanding specifications.

The development of porous materials that can specifically interact with the environment, being a liquid or a gas stream, has received increasing attention, as these materials can be used for a range of applications. Gas or liquid purification and separation processes based on adsorption of a specific compound require a packing of sorbent particles or of monolithic design to allow the interaction of the gas or liquid stream with the sorbent particles. Also heterogeneous catalysis, in gas or liquid phase, is based upon the interaction of the feed with the packed material.

The most common geometric shapes currently used in gas separation and catalysis applications include pellets, extrudates and granulates because of their simplicity and economic feasibility of their manufacturing process. However, a packed bed of this type of shapes entails several drawbacks, such as a large pressure drop when used in a reactor column and limited mass transfer due to slow diffusion to the particles' core which leads to the inefficient use of the catalyst or sorbent material.

Porous monoliths have been found to offer a promising alternative, as they allow to reduce the pressure drop and limit the reduction of the mass-transfer to the ordered packing and the open channelling of the structure.

One way to produce monolithic catalyst structures is by coating of a porous, inert monolithic support. However, coating an inert support often results in a limited catalyst or sorbent loading. Also, surface adhesion of the coating may be limited, with a risk to valuable material leaching. This renders such articles less useful and less efficient.

Another way to produce porous sorbent structures or monolithic catalyst structures is in a layered fashion from a suspension or a paste, for example by stacking a plurality of layers. Different ways exist to make a product in a layered fashion, one of them being additive manufacturing or 3D-printing.

3D-printing has become a technology of interest for many applications, since it allows to produce specific designs and products, which cannot be produced otherwise. 3D-printed structures can be used in a large number of applications, such as filtration, separation, for catalysts, in construction, etc. Different 3D-printing methods are nowadays known, and 3D-printed products having a wide range of possible compositions and properties can be made. Also the designs of the 3D-printed structures can widely vary these days.

A particular 3D-printing technology that produces the 3D-printed article in a layered fashion from a build material, often a paste or a (viscous) suspension, comprises (micro-) extrusion of the paste or suspension in the form of filaments, fibres or strands, layer upon layer. Such a technique is known as robocasting, micro-extrusion or Direct Ink Writing (DIW). Typical build materials used in these techniques comprise an active compound, a binder material and a solvent.

3D-printing of inorganic materials has been performed through the use of a build material which is a combination of (typically inorganic) active compounds and one or more organic and/or inorganic binders to ensure the required mechanical strength of the 3D-printed structure. An example of an inorganic active compound is a ceramic material, an inorganic oxide, and a mineral material, for example various types of clays, zeolites, silica or alumina. However, such 3D-printed inorganic structures often are too brittle. Further, they typically require several post-processing steps, including a thermal treatment (calcination) and/or sintering of the 3D-printed structure. As the thermal treatment causes decomposition of the organic binder, carbon residue of such decomposition may remain in the structure and block parts of the porous structure or inactivate the active compound. Moreover, the thermal treatment is often time and/or energy consuming.

A promising alternative is the incorporation of the inorganic materials into an organic matrix to develop hybrid composites.

'Robocasting of porous alumina hollow fibre monoliths by non-solvent induced phase inversion', Michielsen, B., Mertens, M., et al., Open Ceramics 6, (2021), discloses the development of 3D-printed porous hollow alumina ($Al_2O_3$) filaments. A 3D structure is built by extrusion (robocasting) of a paste comprising porous $Al_2O_3$ and Amperit powder, polyetherimide as polymeric binder, and N-methyl-2-pyrrolidone as solvent in a humid atmosphere. The humid atmosphere induces a phase inversion, providing the extruded hollow fibres sufficient strength to be self-supporting. The extruded filaments, for example in the shape of a 3D structure, are then immersed in a non-solvent to complete the phase inversion, thereby completely solidifying the filaments. The solidified green body is then dried, calcined and sintered to obtain the alumina hollow fibre structure. The calcination removes the polymer binder and organic additives, and the sintering provided is used to obtain the final properties of the porous $Al_2O_3$ fibres.

WO2009/027525 discloses a method to produce a three-dimensional microporous filament construct. The construct is obtained by 3D-printing of a suspension comprising particles of an inorganic material (in particular titanium), a solvent, and one or more (organic) binders into a filament-based green body, followed by phase inversion by means of a non-solvent to solidify the filaments. The solidified green body is then dried, calcined and sintered. The calcination under inert atmosphere causes the organic material to pyrolyze, resulting in carbon containing pyrolysis products. These carbon containing products thus formed may be adsorbed in the porous structure and may reduce or block accessibility of the active sites of the construct. Moreover, sintering causes the pores in the solidified green body to shrink, i.e. sintering densifies the solidified green body and results in a reduced specific surface of the final three-dimensional porous structure. Further, sintering may lead to a loss of functional groups and may cause embrittlement of the inorganic material, in particular titanium.

'Development of 3D-printed polymer-zeolite composite monoliths for gas separation', Thakkar, H., Lawson, S., etal., Chemical Engineering Journal, 348, pages 109-116 (2018), discloses the development of 3D porous sorbent structures comprising approx. 30 wt.% of zeolite 13X or 5A embedded in approx. 40 wt.% Torlon (a polyamide-imide polymer) binder, further comprising additives, for the removal of $CO_2$ from flue gas. Such monoliths are obtained by extrusion of a paste comprising Torlon, the zeolite, a polymeric binder (polyvinylpyrrolidone) and N-methyl-2-pyrrolidone (NMP) and water as solvent. After extrusion of a single layer of the structure, DI water was poured dropwise on the last extruded layer to induce phase inversion of that layer. This provides self-supporting properties to the partially finished structure (and the final structure).

One of the disadvantages of the abovementioned methods is the requirement of a humid environment during extrusion or repeated extrusion-phase inversion cycles to ensure that the porous structure (i.e. the green body) is self-supporting during extrusion. In other words, complex and expensive measures are required to avoid collapse or deformation of the 3D monolith during the building step. This renders the processes time consuming, complex and expensive.

A further disadvantage of the abovementioned methods is that the obtained three-dimensional porous sorbent structures show a significantly reduced specific surface area of the active material (for example the zeolite material) compared to the initial surface area of the active material before its incorporation in the build material or paste composition. In other words, the accessibility of the active material in the three-dimensional porous structure is highly reduced. Yet another disadvantage is that the micropore volume is significantly reduced, when compared to the micropore volume of the initial active material, i.e. before its incorporation in the build material or paste composition. Furthermore, the amount of active material incorporated in the three-dimensional porous sorbent structures is low, which leads to sorbent structures having a low sorbent capacity.

## Summary of the invention

The present invention aims to overcome one or more of the above drawbacks. It is an aim of the invention to provide a three-dimensional (3D) porous sorbent structure or sorbent article and a method of producing the 3D porous sorbent structure or sorbent article, having a reduced energy consumption and requiring a reduced number of process steps to obtain the 3D porous sorbent structure, saving on time, complexity and cost. It is an aim to provide a method allowing to produce a 3D porous sorbent structure having a high sorbent accessibility, in which access to the (pores of the) sorbent material in the sorbent structure is largely maintained compared to the initial or raw sorbent material and hence the activity of the sorbent is largely maintained or retained. It is also an aim to provide a method for producing a 3D porous sorbent structure wherein the majority of the structure of the sorbent material is preserved.

According to a first aspect of the invention, there is therefore provided a method for producing a 3D porous sorbent structure as set out in the appended claims. A method for producing a three-dimensional porous sorbent structure as described herein comprises the steps of building a 3D porous green body, inducing phase inversion of the 3D porous green body, and drying the porous green body, thereby obtaining the three-dimensional porous sorbent structure.

The porous green body is obtained in a layered fashion from a build material comprising an inorganic porous sorbent material and an organic binder material. At least part of the organic binder material is dissolved in a solvent.

The porous green body is obtained in a layered fashion by depositing the build material in a plurality of stacked layers. Advantageously, at least some of the filaments within at least one of the plurality of layers are spaced apart from one another, e.g. as deposited at a distance from one another.

The present invention therefor relates to a method for producing a three-dimensional porous sorbent structure, comprising:

building a three-dimensional (3D) porous green body from a build material comprising an inorganic porous sorbent material and an organic binder material, wherein at least part of the organic binder material is dissolved in a solvent, wherein the build material is deposited as filaments in a plurality of stacked layers to obtain the three-dimensional porous green body, wherein at least some of the filaments within at least one of the plurality of layers are spaced apart from one another,

inducing phase inversion of the three-dimensional porous green body by exposing the three-dimensional porous green body to a non-solvent for the organic binder material, thereby obtaining a solidified three-dimensional porous green body, and

drying the solidified three-dimensional porous green body, thereby obtaining the three-dimensional porous sorbent structure,

wherein the build material comprises between 30 % and 70 % by weight of the inorganic porous sorbent material and between 5 % and 30 % by weight of the organic binder material, based on the total weight of the build material, wherein the organic binder material is at least partially retained in the three-dimensional porous sorbent structure, and wherein the three-dimensional porous sorbent structure has a sorbent accessibility of at least 40 %, wherein the sorbent accessibility is calculated according to formula (I)

$$sorbent\ accessibility\ (\%) = 100 * \frac{S_{BET,structure}}{X * S_{BET,sorbent}} \qquad (I)$$

wherein

$S_{BET,structure}$ is the BET surface area of the three-dimensional porous sorbent structure, $S_{BET,sorbent}$ is the BET surface area of the initial inorganic porous sorbent material,

X is the percentage in weight of the inorganic porous sorbent material, based on the total weight of the three-dimensional porous sorbent structure,

and wherein the BET surface areas of the initial inorganic porous sorbent material and of the three-dimensional porous sorbent structure are determined from argon adsorption isotherms at 87 K.

Advantageously, the three-dimensional green body is built by a 3D-printing technique. In other words, the 3D porous sorbent structure is advantageously a porous 3D-printed sorbent structure. The 3D porous green body can be obtained by means of any 3D-printing technology that allows to obtain a 3D porous structure in a layered fashion. Examples of suitable 3D-printing technologies include micro-extrusion of a build material, e.g. a viscous paste or a solution (also known as robocasting or Direct Ink Writing (DIW)), Fused Filament Fabrication (FFF; also known as extrusion of molten polymeric material through a nozzle or an orifice), and binder jetting.

Advantageously, the inorganic porous sorbent material comprises one or more of a zeolite sorbent material, a metal organic framework (MOF) sorbent material, a metal oxide, a carbon-based material, a clay, a molecular sieve, a resin, and a MXene (i.e. a-few-atoms-thick layers of transition metal carbides, nitrides, or carbonitrides).

The inorganic porous sorbent material can further comprise a catalytically active material. Advantageously, the catalytically active material is active at the temperatures to which the porous green body and the three-dimensional porous sorbent structure are exposed during production and use. Advantageously, the catalytically active material is active at temperatures below the maximum continued service temperature of the organic binder material, as defined by Underwriter Laboratory (UL 746B) Relative Thermal Index (RTI), and preferably at temperatures below 180 °C.

The catalytically active material is advantageously provided on a surface of the inorganic porous sorbent material. Advantageously, the catalytically active material is immobilised, such as adsorbed, at a surface of the inorganic porous sorbent material. The catalytically active material can be provided on a surface of the inorganic porous sorbent material prior to adding the inorganic porous sorbent material to a build paste. Alternatively, or additionally, the catalytically active material can be provided on a surface of the inorganic porous sorbent material after the 3D porous sorbent structure has been obtained.

Advantageously, the catalytically active material comprises or substantially consists of one or more of an enzyme and a micro-organism, such as a yeast or a bacteria. In other words, the catalytically active material advantageously is a biological catalytically active material, i.e. for use in bio-catalysis. Non-limiting examples of enzymes include amylases, such as starch, glucose, fructose and dextrose, lipases, ketoreductases, halogenases, methyltransferases and aldolases.

The build material comprises at least 30 % by weight of the inorganic porous sorbent material, preferably between 30 % and 70 % by weight, such as between 40 % and 60 % by weight, more preferably between 45 % and 55 % by weight, based on the total weight of the build material.

The organic binder material advantageously comprises or substantially consists of a phase inversion polymer. Advantageously, the organic binder material advantageously comprises one or more of a polysulphone, a polyethersulphone, cellulose acetate, a polyvinylidenefluoride, a polyacrylonitrile, a polyethylene-co-vinylalcohol, a polycarbonate, a polyimide, a polyether imide, a polyamide, or a polyamide-imide.

The build material comprises 30 % by weight or less of the organic binder material, preferably between 5 % and 30 % by weight, such as between 5 % and 20 % by weight, more preferably between 10 % and 15 % by weight, based on the total weight of the build material.

The solvent advantageously comprises a polar aprotic solvent. Advantageously, at least part of the organic binder material is dissolved in the solvent. The solvent advantageously comprises or substantially consists of N-methyl-pyrrolidone (NMP), acetone, dimethyl-acetamide (DMAc), dimethylformamide (DMF), dimethylsulphoxide (DMSO), tetrahydrofurane (THF), dioxane, acetic acid, formyl piperidine, morpholine, s-caprolactam, gamma-butyrolactone, methyl ethylketone, chloroform, or a combination of two or more thereof. Advantageously, the build material comprises between 5 % and 65 % by weight of a solvent, preferably between 20 % and 55 % by weight, based on the total weight of the build material.

Phase inversion of the three-dimensional porous green body is induced by exposing it to a non-solvent for the organic binder material, thereby inducing demixing of the solution into a binder rich phase and a binder poor phase. Upon further separation, the solubility of the binder in the solvent is reduced and a solid phase with specific morphology will be formed, thereby obtaining the 3D porous green body.

Advantageously, the non-solvent comprises or substantially consists of a polar protic solvent, such as water, an alcohol, an acid, or combinations thereof.

Advantageously, the phase inversion is induced by immersing the three-dimensional porous green body in the non-solvent and/or by atomising the non-solvent onto the three-dimensional porous green body.

Advantageously, the solidified three-dimensional porous green body obtained after phase inversion of the three-dimensional porous green body is dried at a temperature below the maximum continuous service temperature of the organic binder material. The term "maximum continuous service temperature" as used herein refers to the maximum acceptable temperature above which the mechanical properties or the electrical properties of a part made from the material (here the organic binder material) are significantly degrading over the reasonable lifetime of the product (here the 3D porous sorbent structure). The maximum continuous service temperature can be defined by the Underwriter Laboratory (UL 746B) Relative Thermal Index (RTI).

Advantageously, the solidified three-dimensional porous green body obtained after phase inversion of the three-dimensional porous green body is dried at a temperature between 20 °C and 180 °C, preferably between 20 °C and 150 °C, such as between 20 °C and 130 °C.

Advantageously, the three-dimensional porous green body and the three-dimensional porous sorbent structure are not exposed to temperatures above the maximum continuous service temperature of the organic binder material, wherein the maximum continuous service temperature is as defined hereinbefore. Advantageously, any thermal treatment to which the three-dimensional porous green body and the three-dimensional porous sorbent structure are subjected, is carried out at a maximum temperature of 180 °C. Consequently, and advantageously, the three-dimensional porous sorbent structure is not subjected to any one of calcining and sintering operations, as calcination and sintering are typically performed at temperatures above at least 200 °C, and more often above 300 °C.

The three-dimensional porous sorbent structure obtained after drying comprises at least a portion of the organic binder material contained in the build material. In other words, the organic binder material is at least partially retained in the three-dimensional porous sorbent structure.

The 3D porous sorbent structure obtained by methods of the present disclosure has a sorbent accessibility of at least 40 %, such as at least 50 % or at least 60 %. The sorbent accessibility is advantageously calculated according to formula (I)

$$sorbent\ accessibility\ (\%) = 100 * \frac{S_{BET,structure}}{X*S_{BET,sorbent}} \qquad (I)$$

wherein

$S_{BET,structure}$ is the BET surface area of the three-dimensional porous sorbent structure, $S_{BET,sorbent}$ is the BET surface area of the initial (or raw) inorganic porous sorbent material, X is the percentage in weight of the inorganic porous sorbent material, based on the total weight of the three-dimensional porous sorbent structure, and wherein the BET surface areas are determined from argon adsorption isotherms at 87 K of the initial inorganic porous sorbent material and of the three-dimensional porous sorbent structure.

With "initial porous sorbent material" is meant in the light of the present invention the inorganic porous sorbent material prior to its incorporation in the build material, i.e. the raw porous sorbent material.

According to a second aspect of the invention, there is provided a three-dimensional porous sorbent structure as set out in the appended claims. Advantageously, the structure is obtained by means of methods of the first aspect.

A three-dimensional porous sorbent structure as described herein comprises at least 50 % by weight of an inorganic porous sorbent material, preferably between 70 % and 98 % by weight, more preferably between 80 % and 95 % by weight, based on the total weight of the three-dimensional porous sorbent structure. Advantageously, the inorganic porous sorbent material is as described above.

A three-dimensional porous sorbent structure as described herein comprises 50 % by weight or less of an organic binder material, preferably between 2 % and 30 % by weight, more preferably between 5 % and 20 % by weight, based on the total weight of the three-dimensional porous sorbent structure. Advantageously, the organic binder material is as described above.

Advantageously, the three-dimensional porous sorbent structure has a sorbent accessibility of at least 40 %, such as at least 50 % or at least 60 %. Advantageously, the sorbent accessibility is calculated according to formula (I) as described hereinbefore.

Advantageously, the three-dimensional porous sorbent structure has a microporous volume of at least 30 % of a microporous volume of the initial (or raw) inorganic porous sorbent material, wherein "microporous volume" represents the total volume of micropores in a structure. The microporous volume is advantageously and preferably determined by means of the t-plot method on the argon adsorption isotherms at 87 K of the initial inorganic porous sorbent material and of the three-dimensional porous sorbent structure.

A further aspect of the invention relates to the use of a 3D porous sorbent structure of the second aspect for gas sorption and/or liquid sorption applications. Advantageously, gas sorption and liquid sorption includes the separation of one or more compounds or components from a gas flow or a liquid flow, respectively, and/or the purification of a gas flow or a liquid flow, respectively. Advantageously, sorption, advantageously gas sorption, includes the sorption of one or more of $CO_2$, $H_2O$, volatile organic compounds (VOCs), sulphur oxides ($SO_x$) and nitrogen oxides ($NO_x$).

Advantageously, the three-dimensional porous sorbent structure is during use thereof not exposed to temperatures above the maximum continued service temperature of the organic binder material, as defined by Underwriter Laboratory (UL 746B) Relative Thermal Index (RTI). Advantageously, the three-dimensional porous sorbent structure is during use thereof not exposed to temperatures above 180 °C.

Advantages of the methods of the present invention include the capability to produce mechanically strong 3D porous sorbent structures comprising or maintaining a large accessibility of the sorbent material provided in the sorbent structure. Further, the methods allow to maintain the microporous volume of the initial inorganic porous sorbent material to a large extent, i.e. the method does not significantly fill or cover the (micro)pores of the inorganic sorbent material.

Further, the methods of the invention are suited for producing 3D porous sorbent materials and structures having a low temperature stability or being sensitive to oxidation or thermal decomposition.

**Brief description of the figures**

Aspects of the invention will now be described in more detail with reference to the appended drawings, wherein same reference numerals illustrate same features and wherein:

Figure 1 represents the argon adsorption isotherms at 87 K for three 3D porous sorbent structures obtained by methods of the invention.

Figure 2 represents the pore size distribution of three 3D porous sorbent structures obtained by methods of the invention.

Figures 3A and 3B represent scanning electron microscopy (SEM) images of the surface and the cross-section, respectively, of a first 3D porous sorbent structure obtained by methods of the invention, measured on a single extruded fibre.

Figures 4A and 4B represent scanning electron microscopy (SEM) images of the surface and the cross-section, respectively, of a second 3D porous sorbent structure obtained by methods of the invention, measured on a single extruded fibre.

Figures 5A and 5B represent scanning electron microscopy (SEM) images of the surface and the cross-section, respectively, of a third 3D porous sorbent structure obtained by methods of the invention, measured on a single extruded fibre.

Figure 6 represents the pore size distribution of the mesopores and the macropores of three 3D porous sorbent structures obtained by methods of the invention.

Figure 7 represents the cumulative pore volume of the mesopores and the macropores of three 3D porous sorbent structures obtained by methods of the invention.

Figure 8 represents the $CO_2$ adsorption capacity as function of the pressure for a reference 3D porous sorbent structure.

Figure 9 represents the $CO_2$ adsorption capacity as function of the pressure for a first 3D porous sorbent structure obtained by methods of the invention.

Figure 10 represents the $CO_2$ adsorption capacity as function of the pressure for a second 3D porous sorbent structure obtained by methods of the invention.

Figure 11 represents the $CO_2$ adsorption capacity as function of the pressure for a third 3D porous sorbent structure obtained by methods of the invention.

Figure 12 represents the water adsorption capacity as function of the pressure for a reference 3D porous sorbent structure.

Figure 13 represents the water adsorption capacity as function of the pressure for a first 3D porous sorbent structure obtained by methods of the invention.

Figure 14 represents the water adsorption capacity as function of the pressure for a second 3D porous sorbent structure obtained by methods of the invention.

Figure 15 represents the water adsorption capacity as function of the pressure for a third 3D porous sorbent structure obtained by methods of the invention.

Figure 16 represents the water uptake of a humidity step from 5 % RH to 10 % RH as function of the time, for a reference 3D porous sorbent structure and three 3D porous sorbent structures obtained by methods of the invention.

Figure 17 represents the water uptake of a humidity step from 5 % RH to 10 % RH as function of the time, for a reference 3D porous sorbent structure and three 3D porous sorbent structures obtained by methods of the invention.

Figure 18 represents the $CO_2$ breakthrough curves at 10 % partial pressure for a relative time up to 1250 seconds, for a reference 3D porous sorbent structure and three 3D porous sorbent structures obtained by methods of the invention.

## Description of embodiments

In a first step of the method according to the present disclosure, a 3D porous green body is built from a build material in a layered fashion. A build material refers to a viscous paste, emulsion or solution. The build material comprises an inorganic porous sorbent material and an organic binder material at least partially dissolved in a solvent.

The porous green body can be obtained by means of any layered manufacturing technology that allows to obtain a porous structure. A particularly suited technique is (micro-)extrusion, comprising extruding the build material through a nozzle or an orifice in the form of filaments or strands. Advantageously, the nozzle or orifice has a diameter between 20 $\mu$m and 5 mm, preferably between 30 $\mu$m and 4 mm, more preferably between 50 $\mu$m and 3 mm, for example between 100 $\mu$m and 2 mm. Advantageously, the strands or filaments are deposited in layers on a printing surface, resulting in the green body built as a plurality of stacked layers. Either the nozzle or the printing surface are arranged on a positioning table, such as an XY-table to extrude the filaments or strands in a predetermined pattern. Advantageously, the strands or filaments within one layer are deposited at a distance from one another, thereby forming (macro)pores between the strands or filaments. Advantageously, the strands or filaments are deposited in such a way that filaments or strands of adjacent layers cross one another, or are at least partially arranged on top of one another. Hence, the filaments or strands of adjacent layers make contact resulting in connections between adjacent/consecutive layers.

Advantageously, the filaments or strands have a diameter between 20 $\mu$m and 5 mm, preferably between 30 $\mu$m and 4 mm, more preferably between 50 $\mu$m and 3 mm, for example between 100 $\mu$m and 2 mm.

The (macro)porosity of the porous green body can be varied according to the final application or use of the porous (3D-printed) structure. The porosity can be varied by adapting the 3D-printing process parameters, which is known in the field how to do so. Advantageously, the pores between adjacent filaments or strands have an average size between 1 $\mu$m and 5 mm, preferably between 20 $\mu$m and 4 mm, more preferably between 50 $\mu$m and 3 mm, for example between 100 $\mu$m and 2 mm.

The porous green body, and the 3D porous sorbent structure obtained by the methods of the present disclosure can have a wide variety of geometries. The green body is advantageously a monolith. It can be a monolith having a cuboid or cylindrical shape.

Advantageously, the (initial or raw) inorganic porous sorbent material, i.e. the inorganic porous sorbent material as such, prior to providing it to the build material, has a BET surface area of at least 20 $m^2$/g, preferably at least 25 $m^2$/g, more preferably at least 50 $m^2$/g, such as at least 75 $m^2$/g, or at least 100 $m^2$/g, wherein the BET surface area is advantageously determined from nitrogen adsorption isotherms at 77 K, or alternatively from argon adsorption isotherms at 87 K.

Advantageously, the inorganic porous sorbent material is a particulate material, such as a powder. Advantageously, the inorganic porous sorbent material particles have a particle size distribution having a $d_{50}$ value which is between 1/5 and 1/20 of the diameter of the filaments or strands, preferably between 1/7 and 1/15, such as substantially 1/10 of the filament diameter.

Non-limiting examples of metal oxides suitable as the inorganic porous sorbent material include silica, titania, alumina, and zirconia. Non-limiting examples of carbon-based materials include activated carbon, carbon molecular sieves and carbon nanotubes (CNTs). Non-limiting examples of clay include natural clay minerals and synthetic clay, for example bentonite clay, attapulgite, fuller's earth, kaolin clay, laponite and wollastonite. Non-limiting examples of molecular sieves include aluminosilicates and titanosilicates. MXenes include a-few-atoms-thick layers of transition metal carbides, nitrides, or carbonitrides. Preferred inorganic porous sorbent materials include zeolites and metal organic frameworks. An example of a suitable zeolite is 13X.

Optionally, the inorganic porous sorbent material can be functionalised. A functionalisation can include a silanization, a treatment by phosphonic acid, an impregnation, or a grafting of functional groups on at least part of the surface of the inorganic porous sorbent material. Advantageously, a functionalisation results in an inorganic porous sorbent material that has an increased capability to interact with the environment.

Advantageously, the method of the present disclosure allows to obtain a 3D porous sorbent structure comprising a functionalised inorganic porous sorbent material. An advantage of the present methods is that, as explained hereinabove and herein below, the temperature to which the porous green body and the porous sorbent structure are exposed, remains relatively low, preferably below 180 °C. This allows to maintain the functionality of the functional groups, as these are often temperature sensitive and prone to degradation upon exposure to elevated temperatures.

The inorganic porous sorbent material can be dried prior to adding it to the build material. This reduces the risk of phase inversion starting during building the 3D porous green body or even during storing the sorbent material prior to using it, e.g. prior to adding it to the build material. This further allows improved control of the pore formation (amount, size).

Advantageously, the build material comprises at least 30 % by weight of the inorganic porous sorbent material, preferably between 30 % and 70 % by weight, such as between 40 % and 60 % by weight, more preferably between 45 % and 55 % by weight, such as between 45 % and 50 % by weight, based on the total weight of the build material.

Advantageously, the build material comprises 30 % by weight or less of the organic binder material, preferably between 5 % and 30 % by weight, such as between 5 % and 25 % by weight, between 5 % and 20 % by weight, between 5 % and 15 % by weight, more preferably between 10 % and 15 % by weight, based on the total weight of the build material.

The build material can further comprise one or more additives. The additive can be selected to act as, without being limited thereto, a plasticizer, a dispersant, and/or a pore forming agent. Examples of such additives are calcium carbonate, 1,4-dioxane and diethylene glycol dimethyl ether.

Advantageously, the build material comprises at least 35 % by weight of solid content, preferably more than 40 % by weight, such as more than 45 % by weight, more preferably more than 50 % by weight, most preferably more than 55% by weight, based on the total weight of the build material. The solid content includes the inorganic porous sorbent material, the organic binder material, and further optional compounds such as a plasticizer and a dispersant.

The solvent advantageously comprises a polar aprotic solvent. Advantageously, at least part of the organic binder material is dissolved in the solvent. The solvent can be a non-volatile liquid, a volatile liquid, or a mixture thereof. Preferred solvents include NMP (a non-volatile solvent) and acetone (a volatile solvent).

Advantageously, the build material comprises between 5 % and 65 % by weight of a solvent, preferably between 20 % and 55 % by weight, such as between 30 % and 50 % by weight, more preferably between 35 % and 45 % by weight, based on the total weight of the build material.

Advantageously, the amount of solvent is selected based on the type and amount of sorbent material and binder material to obtain a build material having the required viscosity for the process or technique used to build the 3D porous green body. Depending on the technology or process used for building the 3D porous green body, the optimal viscosity varies. For example, when an extrusion-based 3D-printing technique is applied, the build material advantageously has a viscosity upon printing (so-called printable (shear thinning) viscosity) between 10 Pa.s and $10^6$ mPa.s, preferably between $10^2$ mPa.s and $10^6$ mPa.s, at a shear rate of about 0.01 $s^{-1}$ and a temperature of 25 °C.

The build material can be prepared according to various routes and any one of them may be used in methods of the present disclosure. In some examples, the inorganic porous sorbent material and the organic binder material are mixed together in the solvent, thereby obtaining the build material.

Alternatively, two or more separate solutions are prepared, each comprising at least one different ingredient of the build material. These separate solutions are then mixed to obtain build material. By way of example, a first solution and a second solution are prepared. The first solution can be prepared by mixing the inorganic porous sorbent material in (part of) the solvent, preferably without adding the organic binder material. The second solution can be prepared by mixing the organic binder material in (part of) the solvent, thereby dissolving the organic binder material at least partially in the solvent, preferably without adding the inorganic porous sorbent material. The first solution and the second solution are then mixed to obtain the modulator.

Advantageously, the build materials having a composition as described hereinbefore provides the porous green body with sufficient mechanical strength during the deposition of filaments of the build material in a plurality of stacked layers to obtain the porous green body. It is believed by the inventors that this mechanical strength is to be attributed to the organic binder material. Consequently, no stabilisation needs to be carried out during building of the porous green body, such as spraying water or building in a humid environment to start (i.e. to induce) the phase inversion during building. The inventors have discovered that sufficient mechanical strength during building is obtained even with low amounts of organic binder material, e.g. as low as 5 %, and up to 10 % by weight based on the weight of the build material. Such small amounts also have the advantages that the accessibility to the inorganic sorbent material in the obtained 3D porous sorbent structure is high and that the (micro)pores of the inorganic sorbent material are largely maintained. Further, the obtained 3D porous structures are also sufficiently mechanically strong for the intended uses.

Optionally, the 3D porous green body can be exposed to a non-solvent during building the 3D porous green body as well. This can be realised by atomizing or spraying water or another non-solvent on one or a plurality of layers of the green body once the filaments forming that particular layer have been deposited. Alternatively, the building step can be performed in a humid atmosphere, i.e. an atmosphere having a relative humidity of at least 50 % RH, preferably at least 75 % RH, more preferably at least 80 % RH, or at least 90 % RH.

In a second step of the method of the present disclosure, the porous green body is subjected to phase inversion. During the phase inversion, the porous green body is exposed to a non-solvent for the organic binder material. Advantageously, the solvent comprised in the porous green body is miscible or soluble in the non-solvent.

Upon exposure to a non-solvent, the binder solution demixes into a binder (polymer) rich phase and a binder (polymer) poor phase. Upon further separation, the solubility of the binder (polymer) is reduced and a solid phase with specific morphology will be formed. This leads to a solidification of the porous green body.

The phase inversion also leads to the formation of pores, in particular micropores, in the solidified porous green body. According to the IUPAC definition, micropores are pores having a diameter of less than 2 nm. The porosity depends largely on the type of solvent/non-solvent system which affects the kinetics of the demixing process. For example, instantaneous demixing, happening very quickly after immersion, typically creates a relatively porous matrix. For example, delayed demixing typically leads to a decreased porosity and more sponge-like pores. In other words, by selecting the solvent and non-solvent, the degree of porosity can be controlled.

Advantageously, the non-solvent comprises or substantially consists of a polar protic solvent. Advantageously, the non-solvent is a liquid or a vapour. Non-limiting examples of liquid non-solvents include water, alcohols (e.g. methanol, ethanol, n-propanol or isopropanol), acids (e.g. acetic acid), or combinations of two or more thereof. Preferably, the non-solvent comprises or substantially consists of water, such as demineralised water.

The phase inversion can be induced by techniques known in the art. Non-limiting examples include one or more of immersion of the 3D porous green body in the non-solvent, atomising, spraying or nebulizing the non-solvent onto the three-dimensional porous green body, or exposing the 3D porous green body to an atmosphere comprising or substantially consisting of the non-solvent.

In a third step of the method of the present disclosure, the solidified porous green body is dried. Drying allows to remove remaining solvent and/or non-solvent from the solidified porous green body, thereby obtaining the three-dimensional porous sorbent structure.

The drying is advantageously performed at a temperature below the melting temperature of the organic binder material, or below the glass transition temperature when the organic binder material comprises a polymer. By drying at such temperatures, damage to and/or any removal of the organic binder material can be avoided. Consequently, and advantageously, the three-dimensional porous sorbent structure obtained after drying comprises at least a portion of the organic binder material. Further, by avoiding damage to or removal of at least a portion of the organic binder material, the mechanical strength of the 3D porous sorbent structure can be maintained.

Further, as the organic binder material will not melt, it will not flow into the pores of the 3D porous sorbent structure and/or the pores of the inorganic sorbent material itself, which allows to maintain the accessibility to and the porosity of the inorganic porous sorbent material.

The drying temperature is advantageously chosen based on the organic binder material. Advantageously, the drying is performed at a temperature below the maximal continuous service temperature of the organic binder material, such as at least 5°C, at least 10°C , at least 20°C or at least 30°C below the maximal continuous service temperature, e.g. between 5 °C and 50 °C below the maximal continuous service temperature. The maximal continuous service temperature is as described above. Advantageously, the drying is performed at a temperature between 20 °C and 180 °C, preferably between 20 °C and 150 °C, such as between 20 °C and 130 °C, for example between 20 °C and 100 °C, between 20 °C and 75 °C, such as at room temperature. For example, polysulfone has a maximal continuous service temperature of 180 °C, and the drying is advantageously carried out at a temperature between 20 °C and 150 °C. For example, polyvinylidene fluoride has a maximal continuous service temperature of 150 °C and the drying is advantageously carried out at a temperature between 20 °C and 130 °C.

Advantageously, the three-dimensional porous green body and the three-dimensional porous sorbent structure are not exposed to temperatures above the maximal continuous service temperature of the organic binder material. Advantageously, the three-dimensional porous green body and the three-dimensional porous sorbent structure are not exposed to temperatures above 180 °C. Consequently, and advantageously, at least a portion of the organic binder material is retained in the three-dimensional porous sorbent structure. Advantageously, the three-dimension porous sorbent structure is not subjected to any thermal treatment above the maximal continuous service temperature of the organic binder material. Advantageously, the three-dimension porous sorbent structure is not subjected to any thermal treatment above 180°C. Thermal treatments can be any one of calcining and sintering operations.

A second aspect of the present invention relates to a three-dimensional porous sorbent structure comprising at least 50 % by weight of an inorganic porous sorbent material and 50 % by weight or less of an organic binder material, based on the total weight of the three-dimensional porous sorbent structure, characterised in that the three-dimensional porous sorbent structure has a sorbent accessibility of at least 40 %, wherein the sorbent accessibility is calculated according to formula (I)

$$sorbent\ accessibility\ (\%) = 100 * \frac{S_{BET,structure}}{X * S_{BET,sorbent}} \qquad (I)$$

wherein

$S_{BET,structure}$ is the BET surface area of the three-dimensional porous sorbent structure,
$S_{BET,sorbent}$ is the BET surface area of the initial inorganic porous sorbent material,
X is the percentage in weight of the inorganic porous sorbent material, based on the total weight of the three-dimensional porous sorbent structure,
and wherein the BET surface areas of the initial inorganic porous sorbent material and of the three-dimensional porous sorbent structure are determined from argon adsorption isotherms at 87 K.

Three-dimensional porous sorbent structures of the invention comprise an inorganic porous sorbent material and an organic binder material. Advantageously, the inorganic porous sorbent material and the organic binder material are as described hereinbefore. The 3D porous sorbent structure can thus be considered a hybrid organic/inorganic structure or composite. When the organic binder material comprises a polymer as described above, and the inorganic sorbent material comprises a zeolite, the structure can be considered a hybrid polymer/zeolite structure or composite. Advantageously, the three-dimensional porous sorbent structures are obtained by methods of the invention.

The 3D porous sorbent structure advantageously comprises at least 50 % by weight of the inorganic porous sorbent material, preferably between 60 % and 98 % by weight, more preferably 70 % and 98 % by weight, for example between 75 % and 95 % by weight, most preferably between 80 % and 95 % by weight, based on the total weight of the three-dimensional porous sorbent structure.

The 3D porous sorbent structure advantageously comprises at least 50 vol.% of the inorganic porous sorbent material, preferably between 60 vol.% and 98 vol.%, more preferably 70 vol.% and 98 vol.%, for example between 70 vol.% and 95 vol.%, most preferably between 75 vol.% and 95 vol.%.

The 3D porous sorbent structure advantageously comprises 50 % by weight or less of the organic binder material, preferably between 2 % and 40 % by weight, more preferably between 2 % and 30 % by weight, for example between 5 % and 25 % by weight, most preferably between 5 % and 20 % by weight, based on the total weight of the three-dimensional porous sorbent structure.

The 3D porous sorbent structure advantageously comprises 50 vol.% or less of the organic binder material, preferably between 2 vol.% and 40 vol.%, more preferably 2 vol.% and 30 vol.%, for example between 5 vol.% and 30 vol.%, most preferably between 5 vol.% and 25 vol.%.

Advantageously, the three-dimensional sorbent structure, and in particular the ones obtained by methods of the invention, has a sorbent accessibility of at least 40%, such as at least 50 %, at least 60 % or at least 70 %. The sorbent accessibility is advantageously calculated according to formula (I)

$$sorbent\ accessibility\ (\%) = 100 * \frac{S_{BET,structure}}{X * S_{BET,sorbent}} \qquad (I)$$

wherein

$S_{BET,structure}$ is the BET surface area of the three-dimensional porous sorbent structure,
$S_{BET,sorbent}$ is the BET surface area of the initial (or raw) inorganic porous sorbent material, wherein the initial inorganic porous sorbent material is as defined above, and
X is the percentage in weight of the inorganic porous sorbent material, based on the total weight of the three-dimensional porous sorbent structure.

Advantageously and preferably, the BET surface areas of the initial (or raw) inorganic porous sorbent material and of the three-dimensional porous sorbent structure are determined from argon adsorption isotherms at 87 K. Alternatively, the BET surface areas of the initial inorganic porous sorbent material and of the three-dimensional porous sorbent structure can be determined from nitrogen adsorption isotherms at 77 K. According to IUPAC, the determination of the BET surface areas from the argon adsorption isotherms at 87 K is considered to be more accurate than from the nitrogen adsorption isotherms at 77 K, in particular with regard to the detection and measurement of micropores. In the light of the present invention, the BET surface area represents the specific surface area as calculated by the Brunauer-Emmett-Teller (BET) method.

"$X * S_{BET,sorbent}$" in formula (i) is the so-called theoretical maximum, which is the BET surface area of the initial inorganic porous sorbent material multiplied by the weight percentage thereof in the 3D porous sorbent structure. Consequently, the closer the sorbent accessibility is to 100 %, the closer the BET surface area of the sorbent structure is to the theoretical maximum, and the lower the impact of the organic binder on the surface area (such as by filling the pores or forming a layer on the sorbent material). A high sorbent accessibility of at least 40 %, can thus be considered a measure for a high performing sorbent structure.

Advantageously, the three-dimensional porous sorbent structures of the present invention, and in particular the ones obtained by methods of the invention, have a microporous volume of at least 30 % of the microporous volume of the initial (or raw) inorganic porous sorbent material. The microporous volume as used herein advantageously represents the total volume of micropores in a structure. Advantageously, and preferably, the microporous volume of the initial inorganic porous sorbent material and of the three-dimensional porous sorbent structure is determined by means of the t-plot method on the argon adsorption isotherms at 87 K. Alternatively, the microporous volume of the initial inorganic porous sorbent material and of the three-dimensional porous sorbent structure can be determined by means of the t-plot method on the nitrogen adsorption isotherms at 77 K. Since argon does not have a quadrupole moment and is less reactive than the diatomic nitrogen molecule, argon measurements at 87K are actually recommended over nitrogen measurements at 77K by the IUPAC for surface area and pore size distribution determination.

Examples of suitable applications of three-dimensional porous sorbent structures according to aspects of the present invention are:

- Purification of gaseous flows or liquid flows by adsorption of one or more compounds;
- Separation of certain compounds or components from gas flows or liquid flows by adsorption of such compounds of components;
- Selective adsorption of metal ions from process (liquid) flows;
- Biocatalysis to realise certain reactions in liquid flows at relatively low temperatures, for example by immobilizing an enzyme or a microorganism by means of adsorption of such an enzyme or microorganism on the sorbent structure.

Advantageously, the three-dimensional porous sorbent structures of the present invention, and in particular the ones obtained by methods of the invention, are particularly suited for the adsorption of $CO_2$ from a gaseous flow or a liquid flow. Advantageously, they are also particularly suited for the adsorption of water from a gaseous flow or a liquid flow.

Advantageously, the rate at which compounds are adsorbed, is expressed by an overall mass transfer coefficient k for the adsorbed compound during adsorption and/or desorption thereof. Advantageously, the overall mass transfer coefficient is calculated using the linear driving force model (LDF) described by Glueckauf and Coates.

**Examples**

Three build materials were prepared, each comprising the zeolite 13X (Sylosiv A10H, Grace) as the inorganic porous sorbent material. Three different polymers were used as the organic binder material: polysulfone (PSF, Amoco), polyvinylidene fluoride (PVDF Kynarflex 2801, Arkema) and a polyamide-imide (Torlon 4000TF, Solvay).

Highly concentrated polymer solutions comprising 22.9 % by weight of PSF, 22.6 % by weight of PVDF and 22.2 % by weight of Torlon, respectively, were prepared by dissolving the polymers in N-methyl-2-pyrrolidone (NMP, Brenntag) by means of stirring the solutions for 15 min using an IKA 400 overhead stirrer. The resulting polymer solutions were subsequently kept overnight on a roller bench to ensure complete dissolution of the polymer.

Before adding the zeolite 13X to the polymer solutions, the zeolite was dried at 473 K overnight to eliminate the adsorbed water content. After drying, a certain mass of the heated zeolite powder was mixed with each one of the three polymer solutions in order to achieve build materials each comprising a zeolite/polymer ratio of 80 w%/20 w%. This resulted in a build material having a total solid content of 59.7 %, 59.4 % and 58.8 % for the zeolite/PSF, zeolite/PVDF and zeolite/Torlon build material, respectively.

A reference build material comprising a typical ceramic binder combination was prepared as well. Zeolite 13X as inorganic porous sorbent material was mixed with a compound comprising 50 % by weight of bentonite (VWR) and 50 % by weight of a colloidal silica solution (Ludox AS-40, Grace), based on the total weight of the compound. A build material having a zeolite/binder weight ratio of 80 w%/20 w% was obtained. Next, methyl cellulose (Merck) was added as a rheology modifier to achieve the required viscosity. This resulted in a reference build material having a solid content of 57 %.

The build materials were each (separately) loaded into a syringe and extruded through a thin nozzle by using a mechanically driven piston, mounted on a computer numerically controlled (CNC) machine. In this way, a constant volume flow was ensured and the porous green body was built up layer-by-layer. Two nozzle sizes were used, including 600 $\mu$m and 1200 $\mu$m, to construct squared monolithic-type structures of 3 cm height and 3 cm diameter. The distance between adjacent filaments was kept equal to the filament diameter while each successive layer was rotated with 90°, resulting in straight channels of macroporous dimensions throughout the porous green bodies.

After printing, the porous green bodies obtained from build materials according to the invention were immersed in demineralised (DI) water as non-solvent for 16h to initiate the exchange of the NMP (solvent) with the DI water (non-solvent) and the precipitation (solidification) of the polymer. Afterwards, the solidified porous green bodies were dried at room temperature to remove any remaining or residual water, which resulted in the 3D porous sorbent structures.

The green body obtained from the reference build material was not subjected to a phase inversion step, but was dried at room temperature for 2 days and then calcined at 823 K to thermally decompose the organic binder material.

Characterisation of the 3D porous sorbent structures (monoliths)

Prior to characterizing the 3D porous sorbent structures obtained according to the invention, they were activated (degassed) by heating them overnight under vacuum. The structures comprising PSF and polyamide-imide were degassed at 423 K. The structure comprising PVDF was degassed at 383 K, due to the thermal instability of PVDF at 423 K.

The porosity of the 3D porous sorbent structures according to the invention, obtained with the 600 $\mu$m nozzle size, was evaluated by comparing the specific surface area, the total pore volume and the pore size distribution, with the respective values of the initial zeolite 13X, i.e. the zeolite 13X prior to adding it to the build material. The results are presented in Table 1.

To this end, the argon isotherm of each sample was measured on the degassed structures on a Quantachrome Autosorb AS-1 at 87K, and the nitrogen isotherm of each sample was measured on the degassed structures on a Quantachrome Autosorb-iQ-MP (volumetric) at liquid nitrogen temperatures (77K).

The specific surface area was calculated by the Brunauer-Emmett-Teller (BET) method (so-called BET surface area, $S_{BET}$ in Table 1). Argon does not have a quadrupole moment and is less reactive than the diatomic nitrogen molecule, and thus argon measurements at 87 K are actually recommended over nitrogen measurements at 77 K by the IUPAC for surface area and pore size distribution determination, the results for both are mentioned in table 1.

Looking at the results for the argon isotherms and degassing at 423 K, the initial zeolite 13X had a BET surface area of 787 $m^2$/g, whereas the zeolite/PSF sorbent structure had a BET surface area of 572 $m^2$/g and the zeolite/polyamide-imide (zeolite/Torlon in Table 1) had a BET surface area of 427 $m^2$/g, which is 72.7 % and 54.3 % of the BET surface area of the initial zeolite 13X, respectively. Looking at the results for the argon isotherms and degassing at 383 K, the initial zeolite 13X had a BET surface area of 586 $m^2$/g, whereas the zeolite/PVDF sorbent structure had a BET surface area of 432 $m^2$/g, which is 73.7 % of the BET surface area of the initial zeolite 13X.

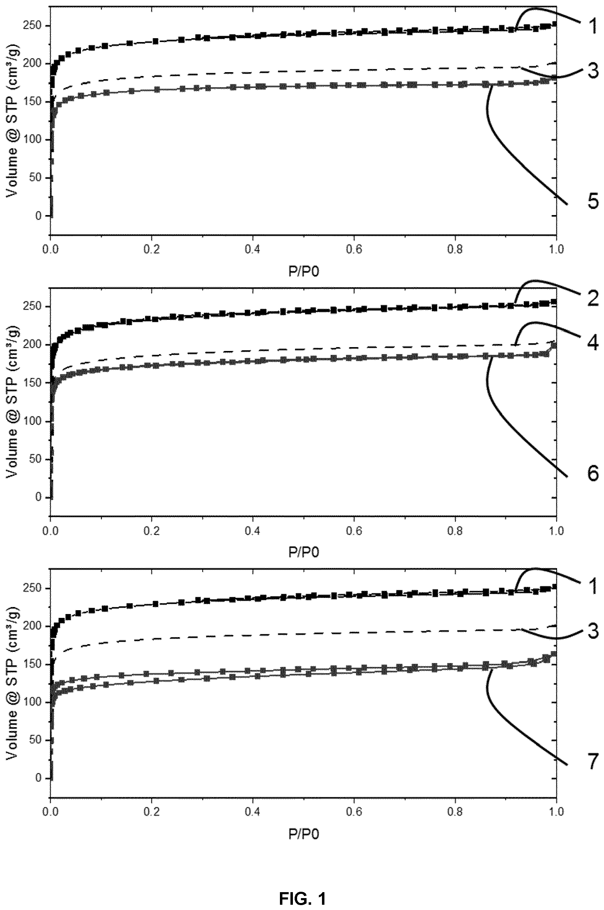

Figure 1 shows the argon adsorption isotherms for the initial zeolite degassed at 423 K 1 and at 383 K 2, the argon adsorption isotherms for 80% of the values for the initial zeolite degassed at 423 K 3 and at 383 K 4 (the theoretical maximum), and the adsorption isotherms for the zeolite/PSF sorbent structure 5, the zeolite/PVDF sorbent structure 6 and the zeolite/Torlon sorbent structure 7. The values for the BET surface area corresponded well to the expected values for the structures comprising PSF and PVDF. Indeed, since the zeolite can be considered 'diluted' to 80 % due to the presence of the organic binder material, the "theoretical maximum value" can be considered as being 80% of the value of the initial zeolite 13X. This indicates that PSF and PVDF have sufficient porosity, thereby allowing excellent access to the zeolite. However, for the sorbent structure comprising polyamide-imide (Torlon) a significant decrease in the specific surface area was observed. Further, the high amount of argon adsorption at the lower pressure range indicates the presence of microporosity, which is characteristic for the microporous nature of the zeolite powder.

The total pore volume ($V_{tot}$ in Table 1) of the 3D porous sorbent structures was calculated by the Barrett-Joyner-Halenda (BJH) method using the argon adsorption isotherms at 87 K.

The volume of the micropores ($V_{mic}$ in Table 1) was calculated by the t-plot method using the argon adsorption isotherms at 87 K. The initial zeolite 13X, after degassing at 423 K, had a micropore volume of 0.291 $cm^3$/g, whereas the zeolite/PSF sorbent structure had a micropore volume of 0.207 $cm^3$/g and the zeolite/polyamide-imide (zeolite/Torlon in Table 1) had a micropore volume of 0.154 $cm^3$/g, which is 71.1 % and 52.9 % of the micropore volume of the initial zeolite 13X, respectively. The initial zeolite 13X, after degassing at 383 K, had a micropore volume of 0.286 $cm^3$/g, whereas the zeolite/PVDF sorbent structure had a micropore volume of 0.214 $cm^3$/g, which is 74.8 % of the micropore volume of the initial zeolite 13X.

The values for the micropore volume corresponded well to the expected values for the structures comprising PSF and PVDF, indicating that PSF and PVDF does not seem to fill or block the (micro)pores of the zeolite 13X to a significant degree. Indeed, since the zeolite can be considered 'diluted' to 80 % due to the presence of the organic binder material, the "theoretical maximum value" can be considered as being 80% of the value of the initial zeolite 13X. However, for the sorbent structure comprising polyamide-imide (Torlon) a significant decrease in the micropore volume was observed.

**Table 1 - surface area, pore volume and zeolite accessibility for zeolite 13X powder and three inventive 3D porous sorbent structures; 600 μm nozzle**

| | | | Sample ($T_{degassing}$) | Zeolite powder (383 K) (423 K) | Zeolite/PSF (423 K) | Zeolite/ PVDF (383 K) | Zeolite/ Torlon (423 K) |
|---|---|---|---|---|---|---|---|
| $N_2$ | Surface area | $S_{BET}$ | [m$^2$/g] | 595 994 | 714 | 471 | 327 |
| | | Smic | [m$^2$/g] | 579 933 | 700 | 452 | 296 |
| | Pore volume | $V_{tot}$ | [cm$^3$/g] | 0.250 0.419 | 0.292 | 0.207 | 0.164 |
| | | Vmic | [cm$^3$/g] | 0.224 0.355 | 0.269 | 0.176 | 0.112 |
| Ar | Surface area | $S_{BET}$ | [m$^2$/g] | 586 787 | 572 | 432 | 427 |
| | | Smic | [m$^2$/g] | 565 768 | 561 | 414 | 400 |
| | Pore volume | $V_{tot}$ | [cm$^3$/g] | 0.301 0.317 | 0.225 | 0.239 | 0.208 |
| | | Vmic | [cm$^3$/g] | 0.291 0.286 | 0.207 | 0.214 | 0.154 |
| | Zeolite accessibility | | % | / | 90.8 | 94.5 | 67.8 |

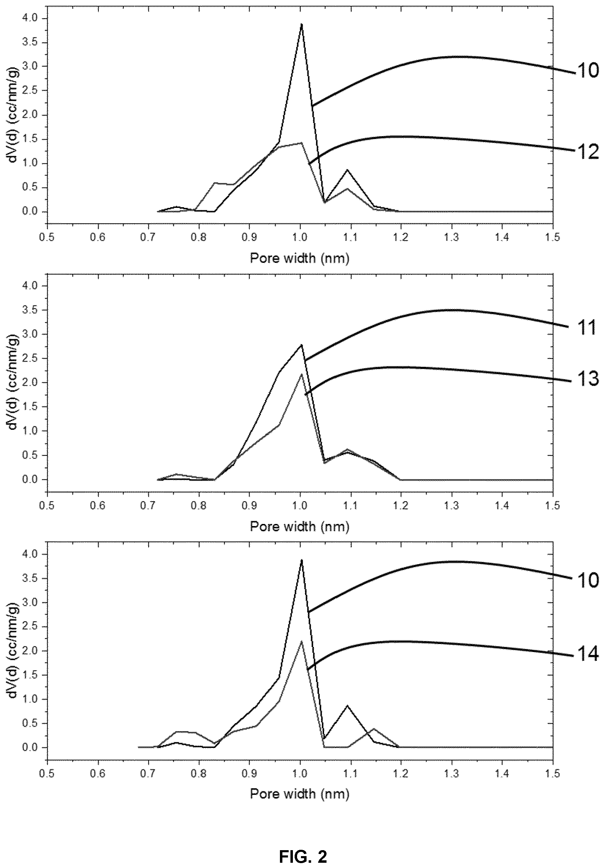

The pore size distribution was determined by using non-local density functional theory (NLDFT) on the argon adsorption isotherms at 87 K. Figure 2 shows the results for the initial zeolite degassed at 423 K 10 and at 383 K 11, and for the zeolite/PSF sorbent structure 12, the zeolite/PVDF sorbent structure 13 and the zeolite/Torlon sorbent structure 14. Comparing the pore size distribution of the zeolite powder to the porous sorbent structures, no significant difference was observed for the zeolite/PVDF sorbent structure and a small shift to lower pore sizes was observed for the zerolite/PSF sorbent structure. This indicates the preservation of the majority of the zeolite structure.

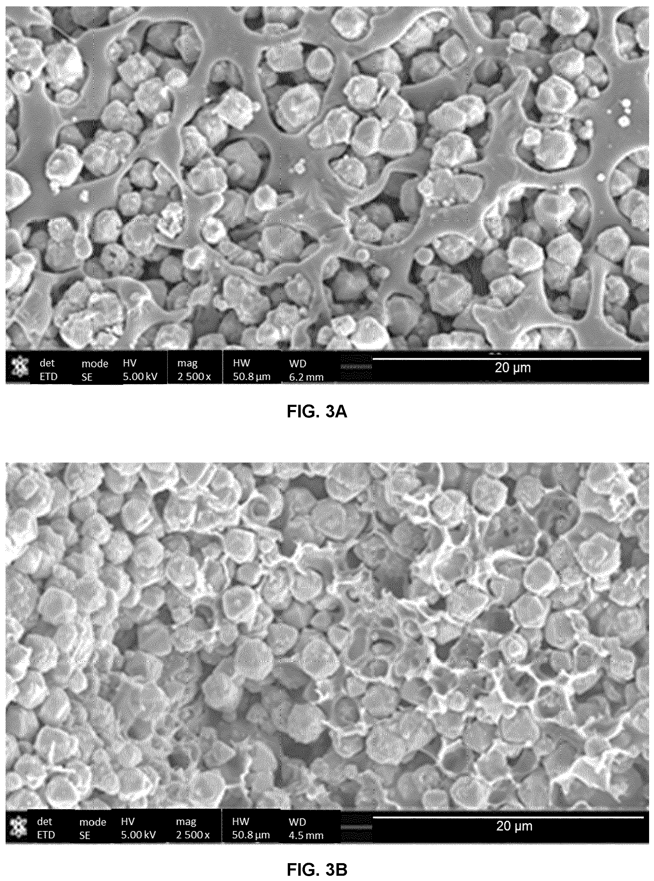

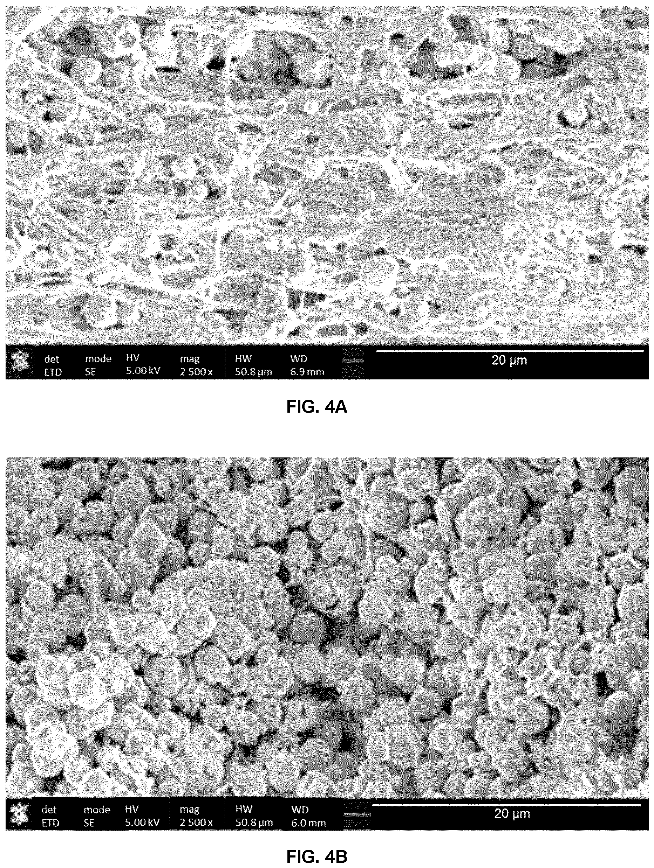

This is further confirmed by the scanning electron microscope (SEM) images of the surface morphology of both sorbent structures, obtained with a FEGFEI Nova NanoSEM 450 at an accelerating voltage of 5 kV. Figure 3A shows the surface and Figure 3B the cross-section of a single filament of the zeolite/PSF sorbent structure. Figure 4A shows the surface and Figure 4B the cross-section of a single filament of the zeolite/PVDF sorbent structure. A clear external polymeric layer was present at the surface, obtained by the phase inversion. The solvent/non-solvent exchange seems to have created a porous network at the outside of the fibers, ensuring the easy accessibility of the zeolite particles and preventing the zeolite particles to diffuse out of the polymer composite.

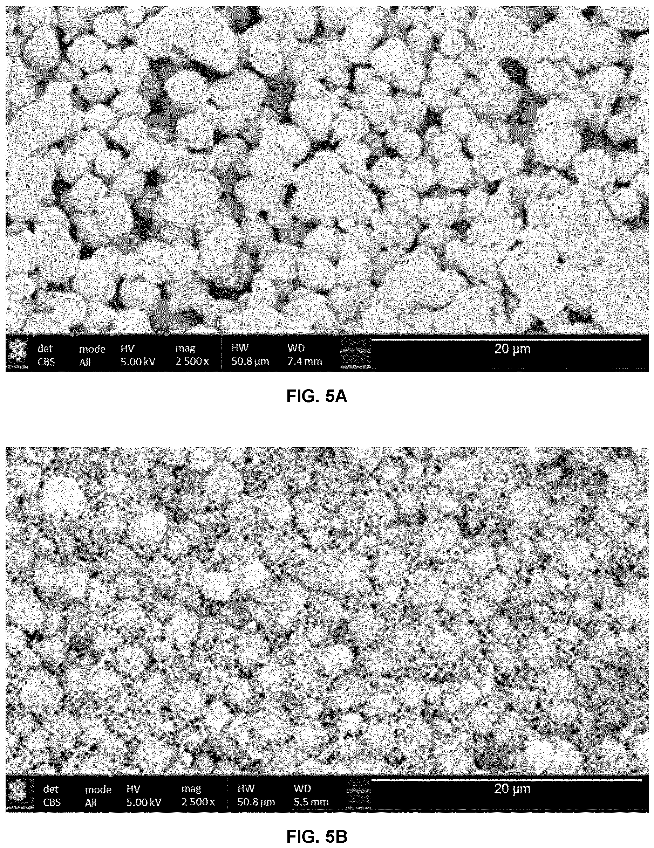

Contrary to PVDF and PSF, the addition of the Torlon polymer to the zeolite powder significantly reduces the adsorbed total volume to a larger extent compared to the theoretical maximum. Furthermore, a hysteresis curve is formed which might be a first indication of classical pore/ink-bottle blocking or diffusion of the polyamide-imide polymer into the zeolite pores. This is also observed at the shift from the derived pore size distribution, where the peak intensity at a pore width of 0.75 nm is significantly increased. This is also confirmed by the scanning electron microscope (SEM) images of the surface morphology. Figure 5A shows the surface of a single filament of the zeolite/Torlon sorbent structure, from which it seems that several portions of the polymer have fused together, thereby blocking the access to the zeolite. Figure 5B shows the cross-section of a single filament of the zeolite/Torlon sorbent structure.

When calculating the zeolite accessibility according to formule (I) as presented above, a significant decrease is observed for the zeolite/Torlon sorbent structure, possibly and as explained above caused by the pore blocking of the polymer. However, more than 90 % zeolite material remains accessible in the zeolite/PSF and the zeolite/PVDF sorbent structures.

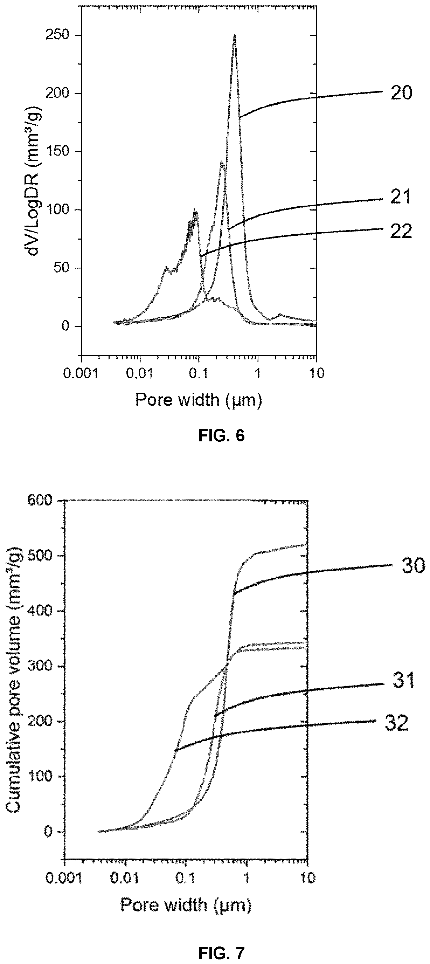

The mesoporosity and the macroporosity of the three inventive porous sorbent structures was measured by means of mercury intrusion porosimetry on a Thermo electron Corporation Pascal 140-240 series. Figure 6 shows the (meso- and macro-)pore size distribution for the zeolite/PVDF sorbent structure 20, the zeolite/PSF sorbent structure 21 and the zeolite/Torlon sorbent structure 22. Figure 7 shows the cumulative pore volume for the zeolite/PVDF sorbent structure 30, the zeolite/PSF sorbent structure 31 and the zeolite/Torlon sorbent structure 32. A high degree of meso- and macroporosity was observed. The polymer that is used as the organic binder material has a large influence on the pore size distribution and overall porosity of the structure. The highest pore volume was observed in the PVDF composite, showing a unimodal pore distribution with a main pore width around 0.35 $\mu$m and total pore volume of 528 m$^3$/g. The PSF and Torlon composites were showing a significantly lower pore volume, with a cumulative volume of 335 m$^3$/g and 345 mm$^3$/g for the PSF and Torlon composites respectively. Although the PSF composites were also showing a unimodal pore distribution with a main pore width around 0.25 $\mu$m, a trimodal pore distribution is observed for the Torlon composites with the main pore diameters at 0.03 $\mu$m, 0.09 $\mu$m and 0.20 $\mu$m.

Adsorption performance

The $CO_2$ adsorption performance of the degassed sorbent structures, obtained with a 600 $\mu$m nozzle, was evaluated based on isotherm measurements performed at 273K on a Chemstar TPx chemisorption analyzer (Quantachrome Instruments). As a carrier gas, Helium was used with a flow speed of 200 mL/min. The same measurement was also performed on the initial zeolite 13X, degassed at the same temperature as the sorbent structure to which it was compared. Further, the ceramic zeolite/clay reference sample was also measured after degassing at 383 K to evaluate the impact of the polymer binder in comparison with the clay binder. The static $CO_2$ adsorption capacities as measured are presented in Table 2.

From the static adsorption capacities of the zeolite and the sorbent structures, a relative capacity is calculated as the $CO_2$ adsorption capacity of the sorbent divided by 80% of the value of the pure, initial zeolite, as the sorbent structure comprises 80 % by weight of the zeolite. The closer this value to 100%, the less the binder material reduces the $CO_2$ adsorption. It is clear that high values (above 90 %) are obtained for all sorbent structures, whereas the zeolite/Torlon sorbent structure has a relative capacity higher than 100%. The latter may indicate that the Torlon polymer itself also adsorbs $CO_2$ to a certain degree.

Water isotherm measurements were performed on the degassed sorbent structures using a IGAsorp standard Dynamic Vapour Sorption (DVS) analyzer under isothermal conditions at 298K with simultaneous determination of both kinetic information and equilibrium uptake. The carrier gas used throughout the measurements was technical grade nitrogen (Air products) with a flow of 250 mL/min. Distilled water was used in the IGAsorp reservoir to humidify the gas when required. The static water adsorption capacities as measured are presented in Table 2.

Comparing the total $H_2O$ uptake of the polymer composites to the pure zeolite powder, the adsorption capacity closely approaches the theoretical maximum. A relative weight change, defined as the water adsorption capacity of the sorbent (or the weight gain thereof) divided by 80% of the value of the pure, initial zeolite, of 93.3 %, 86.8 % and 103.1 % was calculated for the PSF-, PVDF- and Torlon-based porous sorbent structure, respectively. Such high values indicate the unaltered accessibility of the zeolite pores. The relative weight change of the zeolite/clay sorbent structure was calculated to be 122.6 %. This extremely high value could be explained by the presence of plate-like clay particles, which gave rise to slit-shaped pores.

**Table 2 - $CO_2$ and $H_2O$ adsorption capacity for zeolite powder, a reference 3D porous sorbent structure and 3 inventive 3D porous sorbent structures**

| Samples | Degassing T K | $CO_2$ | | $H_2O$ | |
| --- | --- | --- | --- | --- | --- |
| | | Capacity[1] [mmol/g] | Relative capacity[2] [%] | Weight change[3] [%] | Relative weight change[2] [%] |
| Zeolite | 383 | 6.77 | / | 28.5 | / |
| | 423 | 7.09 | | 30.8 | |
| Zeolite/Clay | 423 | 5.34 | 94.1 | 30.2 | 122.6 |
| Zeolite/Psf | 423 | 5.32 | 93.8 | 23.0 | 93.3 |
| Zeolite/PVDF | 383 | 5.00 | 92.3 | 19.8 | 86.8 |

(continued)

| Samples | Degassing T K | CO<sub>2</sub> | | H<sub>2</sub>O | |
|---|---|---|---|---|---|
| | | Capacity[1] [mmol/g] | Relative capacity[2] [%] | Weight change[3] [%] | Relative weight change[2] [%] |
| Zeolite/Torlon | 423 | 5.63 | 104.0 | 25.4 | 103.1 |

[1] $CO_2$ capacity measured at 1 bar absolute pressure

[2] Equals the ratio between sample capacity/weight change and 80% of reference zeolite

[3] Weight change measured at 90% relative humidity

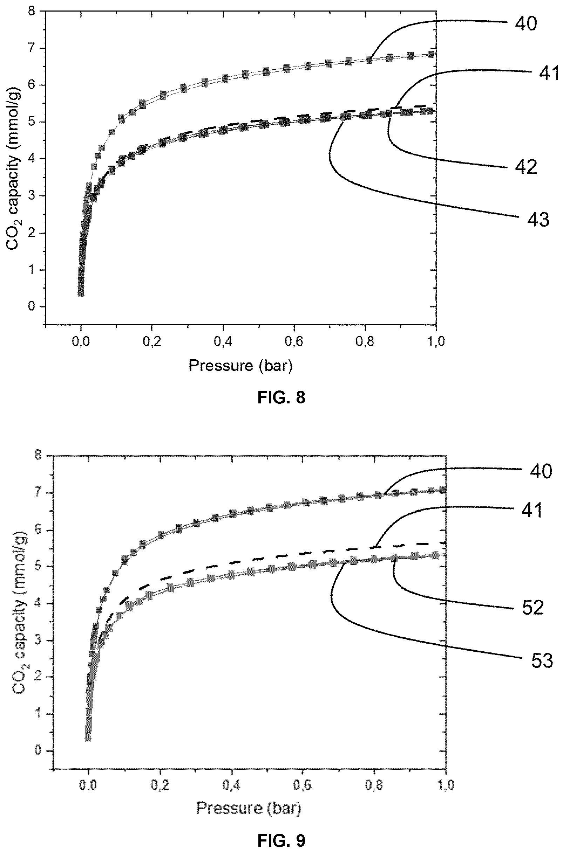

Figure 8 shows the $CO_2$ adsorption capacity as a function of pressure for the initial zeolite 40 degassed at 423 K, the theoretical maximum of 80% of the value of the initial zeolite 41, and for the zeolite/clay sorbent structure with a filament thickness of 1200 $\mu$m 42 and a filament thickness of 600 $\mu$m 43 (also degassed at 423 K). A fast increase in $CO_2$ adsorption at the lower pressure range was observed, which indicates the microporous nature of the zeolite 13X. Further, the total adsorption capacity approached the theoretical maximum closely, independently of the filament thickness. This indicates that the clay binder presence does not have an impact on the adsorptive properties of the zeolite.

Figure 9 shows the $CO_2$ adsorption capacity as a function of pressure for the initial zeolite 40 degassed at 423 K, the theoretical maximum of 80% of the value of the initial zeolite 41, and for the zeolite/PSF sorbent structure with a filament thickness of 1200 $\mu$m 52 and a filament thickness of 600 $\mu$m 53 (also degassed at 423 K). A fast increase in $CO_2$ adsorption at the lower pressure range was observed, which indicates the microporous nature of the zeolite 13X. Further, the total adsorption capacity approached the theoretical maximum closely, independently of the filament thickness. This indicates that the PSF binder presence does not have a significant impact on the adsorptive properties of the zeolite.

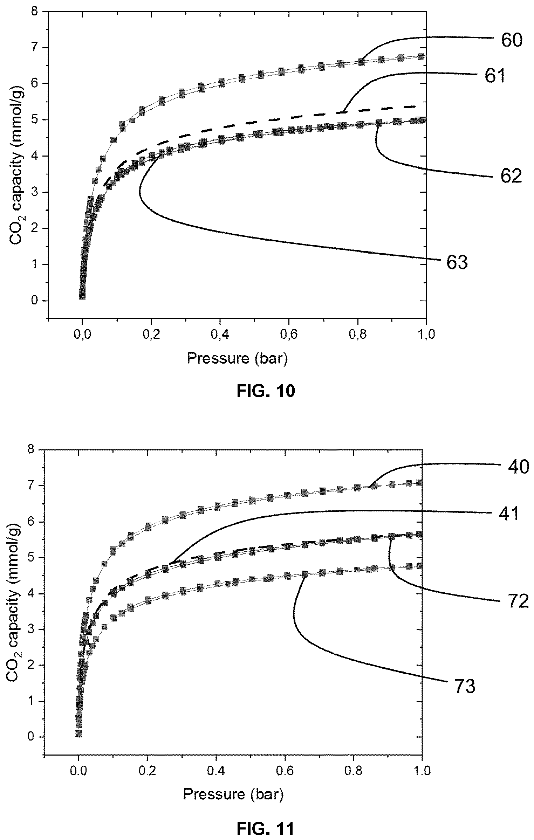

Figure 10 shows the $CO_2$ adsorption capacity as a function of pressure for the initial zeolite 60 degassed at 383 K, the theoretical maximum of 80% of the value of the initial zeolite 61, and for the zeolite/PVDF sorbent structure with a filament thickness of 1200 $\mu$m 62 and a filament thickness of 600 $\mu$m 63 (also degassed at 423 K). A fast increase in $CO_2$ adsorption at the lower pressure range was observed, which indicates the microporous nature of the zeolite 13X. Further, the total adsorption capacity approached the theoretical maximum closely, independently of the filament thickness. This indicates that the PVDF binder presence does not have a significant impact on the adsorptive properties of the zeolite.

Figure 11 shows the $CO_2$ adsorption capacity as a function of pressure for the initial zeolite 40 degassed at 423 K, the theoretical maximum of 80% of the value of the initial zeolite 41, and for the zeolite/Torlon sorbent structure with a filament thickness of 1200 $\mu$m 72 and a filament thickness of 600 $\mu$m 73 (also degassed at 383 K). An inconsistent adsorption capacity was noticed in function of the filament thickness. A significant decreased $CO_2$ uptake was observed in the case of a 1200 $\mu$m filament thickness, which corresponds with the decreased total pore volume observed in the $N_2$ and Ar porosity measurements. In contrast to the 1200 $\mu$m thick filaments, the 600 $\mu$m thick filament-based sorbent structure indicated an uptake slightly exceeding the theoretical maximum. This difference in adsorption capacity might indicate a dissimilar internal structure when comparing the two filament thicknesses and accumulation of the polymer in the inner core during the phase inversion process with the 1200 $\mu$m filaments. Furthermore, a possible explanation of the high adsorption capacity of the 600 $\mu$m filaments might be a combination of the interaction of $CO_2$ with the Torlon polymer, and an additional pore volume in the ultra-micropore range which is undetectable by argon measurements but accessible by $CO_2$ molecules.

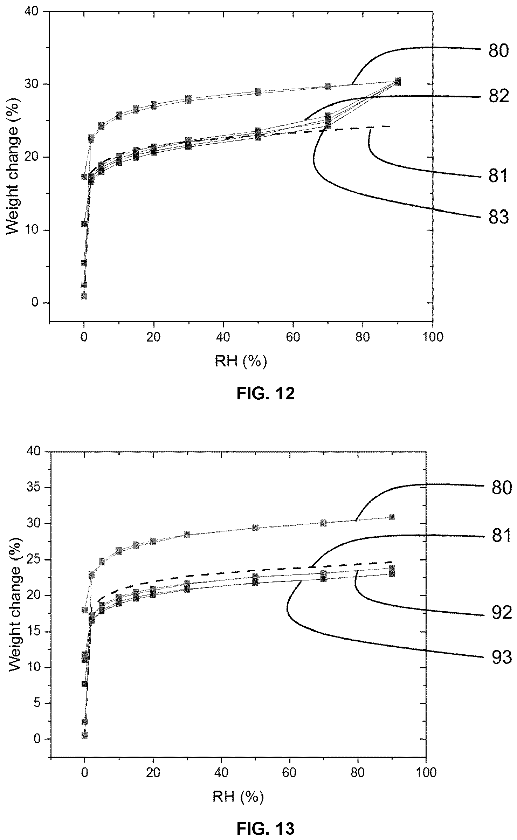

Figure 12 shows the water adsorption capacity as a function of pressure for the initial zeolite 80 degassed at 423 K, the theoretical maximum of 80% of the value of the initial zeolite 81, and for the zeolite/clay sorbent structure with a filament thickness of 1200 $\mu$m 82 and a filament thickness of 600 $\mu$m 83 (also degassed at 423 K). The shape of the isotherm of the zeolite/clay sorbent structures showed a type H3 hysteresis, independently of the filament thickness. This can be attributed to the plate-like structure of the bentonite clay particles and their expansion and contraction.

Figure 13 shows the water adsorption capacity as a function of pressure for the initial zeolite 80 degassed at 423 K, the theoretical maximum of 80% of the value of the initial zeolite 81, and for the zeolite/PSF sorbent structure with a filament thickness of 1200 $\mu$m 92 and a filament thickness of 600 $\mu$m 93 (also degassed at 423 K). The water adsorption isotherms of the sorbent structure showed a type I isotherm, independently of the filament thickness. This is considered characteristic for the microporous nature of the zeolite powder.

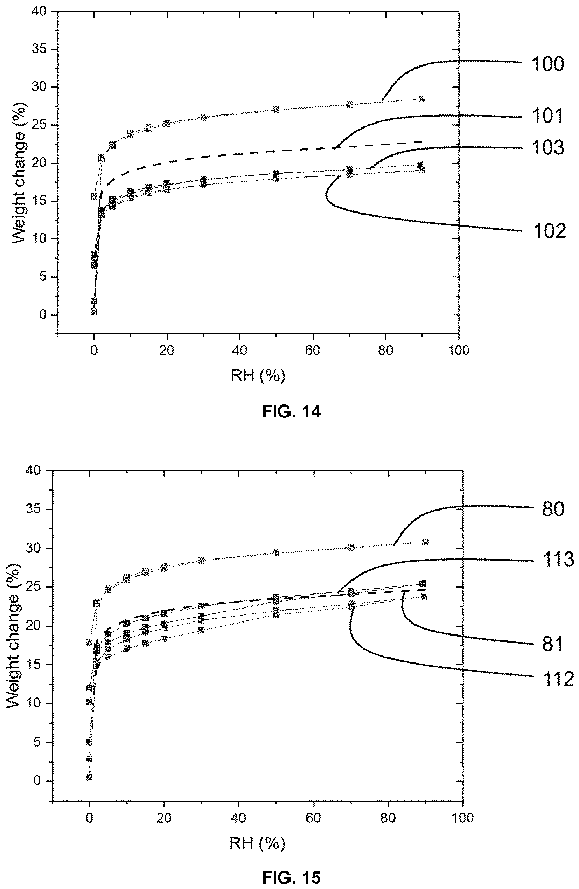

Figure 14 shows the water adsorption capacity as a function of pressure for the initial zeolite 100 degassed at 383 K, the theoretical maximum of 80% of the value of the initial zeolite 101, and for the zeolite/PVDF sorbent structure with a filament thickness of 1200 $\mu$m 102 and a filament thickness of 600 $\mu$m 103 (also degassed at 423 K). The water adsorption isotherm of the sorbent structure showed a type I isotherm, independently of the filament thickness. This is considered characteristic for the microporous nature of the zeolite powder.

Figure 15 shows the water adsorption capacity as a function of pressure for the initial zeolite 80 degassed at 423 K, the theoretical maximum of 80% of the value of the initial zeolite 81, and for the zeolite/Torlon sorbent structure with a filament thickness of 1200 $\mu$m 112 and a filament thickness of 600 $\mu$m 113 (also degassed at 383 K). The water adsorption isotherms of the sorbent structure showed a hysteresis curve, similarly as observed in the argon adsorption isotherm measurements. It is believed that this is caused by a combination of pore blocking by the polymer and the chemical interaction of water molecules with the amine functionalities of the polyamide-imide, causing a delayed desorption. Further, a significant decreased water uptake was observed in the case of a 1200 $\mu$m filament thickness as compared to the 600 $\mu$m filament thickness, which corresponds with the decreased total pore volume observed in the $N_2$ and Ar porosity measurements.

Adsorption kinetics

The adsorption kinetics of a sorbent structure are a measure for the adsorption- and desorption rate of the sorbent structure. Higher adsorption kinetics indicate a faster adsorption and desorption, and thus the ability to perform more adsorption/desorption cycles within a given timeframe, leading to a more industrially interesting sorbent structure.

The adsorption rates were expressed in terms of the overall mass transfer coefficient k, calculated using the linear driving force model (LDF) described by Glueckauf and Coates. Table 3 shows the overall mass transfer coefficient of the water adsorption rates as calculated based on the water isotherms discussed above, for the reference zeolite/clay sorbent structure, the zeolite/PSF sorbent structure, the zeolite/PVDF sorbent structure and the zeolite/Torlon sorbent structure. All four sorbent structures were tested having filaments of 600 $\mu$m and of 1200 $\mu$m, and were degassed at the temperatures as described above.

**Table 3 - Mass transfer coefficient during adsorption and desorption for a reference 3D porous sorbent structure and 3 inventive 3D porous sorbent structures**

| | | | Mass transfer coefficient, k $\times$ 103 (1/s) | | | |
| --- | --- | --- | --- | --- | --- | --- |
| | | | Adsorption | | Desorption | |
| Sample | Fiber diameter | Degassing temperature | 2-5% | 5-10% | 10-5% | 5-2% |
| Zeolite/clay | 1200 $\mu$m | 423 K | 1.69 | 2.88 | 2.04 | 0.77 |
| | 600 $\mu$m | | 3.57 | 7.79 | 4.86 | 1.44 |
| Zeolite/PSF | 1200 $\mu$m | 423 K | 1.98 | 3.62 | 2.18 | 0.92 |
| | 600 $\mu$m | | 4.68 | 7.22 | 7.65 | 1.13 |
| Zeolite/PVDF | 1200 $\mu$m | 383 K | 1.83 | 2.67 | 2.59 | 1.09 |
| | 600 $\mu$m | | 4.68 | 6.34 | 6.59 | 1.23 |
| Zeolite/Torlon | 1200 $\mu$m | 423 K | 0.86 | 1.32 | 0.99 | 0.55 |
| | 600 $\mu$m | | 1.72 | 3.04 | 1.56 | 1.02 |

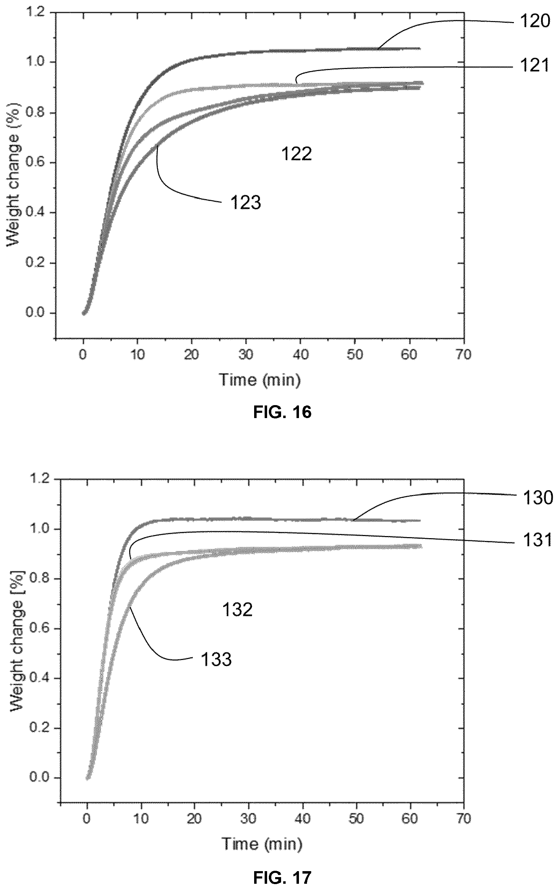

Figures 16 shows the water uptake curves for the humidity step from 5 % RH to 10 % RH as a function of time, measured on single filaments with a filament diameter of 1200 $\mu$m, for the zeolite/clay reference sorbent structure 120, the zeolite/PSF sorbent structure 121, the zeolite/PVDF sorbent structure 122, and the zeolite/Torlon sorbent structure 123.

Figure 17 shows the water uptake curves for the humidity step from 5 % RH to 10 % RH as a function of time, measured on single filaments with a filament diameter of 600 $\mu$m, for the zeolite/clay reference sorbent structure 130, the zeolite/PSF sorbent structure 131, the zeolite/PVDF sorbent structure 132, and the zeolite/Torlon sorbent structure 133.

In figures 16 and 17, the slope at the linear part of the initial water adsorption gives an indication of the uptake rate. A steeper curve, i.e. a higher uptake rate, implies a reduction of the overall time until saturation. Comparison between figure 16 and figure 17 shows that a significantly increased diffusion coefficient was observed for the sorbents with a filament diameter of 600 $\mu$m, which indicated the reduction of limitations of the mass diffusion by reducing the filament diameter.

Further, as also clear from Table 3, the zeolite/PSF and the zeolite/PVDF sorbent structures showed adsorption coefficients comparable to the zeolite/clay reference sorbent structure. Contrary to PSF and PVDF, addition of the Torlon polymer does seem to slightly reduce the kinetic constant. This however closely correlates to the reduced total pore volume and pore size distribution as described hereinbefore, which might thus be the main reason for the reduced uptake rates.

$CO_2$ breakthrough curves were measured at an applied $CO_2$ partial pressure of 10 %. The $CO_2$ breakthrough curves were obtained by measuring the concentration of $CO_2$ at the end of a column filled with sorbent material, wherein $CO_2$ at a certain partial pressure was passed through the column. The slope of the $CO_2$ breakthrough curves is known to give an idea of the kinetics of the $CO_2$ adsorption.

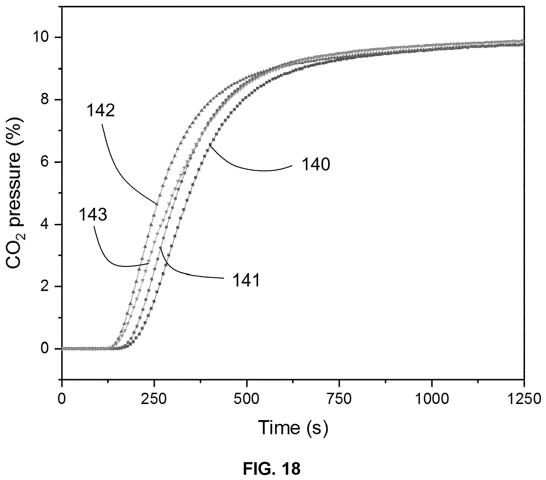

Figure 18 shows the $CO_2$ breakthrough curves at a $CO_2$ partial pressure of 10 % for a relative time up to 1250 seconds for the zeolite/clay reference sorbent structure 140, the zeolite/PSF sorbent structure 141, the zeolite/PVDF sorbent structure 142, and the zeolite/Torlon sorbent structure 143.

It is clear from Figure 18 that the zeolite/PSF and zeolite/PVDF sorbent structure showed very similar adsorption coefficients in comparison with the zeolite/clay reference sorbent structure. Contrary to PSF and PVDF, addition of the Torlon polymer does seem to slightly reduce the kinetic constant at low $CO_2$ partial pressures. It is believed that this lower kinetic constant closely correlates to the reduced total pore volume and pore size distribution of the zeolite/Torlon sorbent structure, as has been described hereinbefore. As a conclusion, the presence of a PSF polymer and a PVDF polymer to develop a hybrid zeolite composite does not negatively impact the kinetic uptake of $CO_2$ and $H_2O$, and shows very comparable behavior as the frequently used reference clay binder.

### Claims

1. Method for producing a three-dimensional porous sorbent structure, comprising:

   building a three-dimensional porous green body from a build material comprising an inorganic porous sorbent material and an organic binder material, wherein at least part of the organic binder material is dissolved in a solvent, wherein the build material is deposited as filaments in a plurality of stacked layers to obtain the three-dimensional porous green body, wherein at least some of the filaments within at least one of the plurality of layers are spaced apart from one another,

   inducing phase inversion of the three-dimensional porous green body by exposing the three-dimensional porous green body to a non-solvent for the organic binder material, thereby obtaining a solidified three-dimensional porous green body, and

   drying the solidified three-dimensional porous green body, thereby obtaining the three-dimensional porous sorbent structure,

   **characterised in that** the build material comprises between 30 % and 70 % by weight of the inorganic porous sorbent material and between 5 % and 30 % by weight of the organic binder material, based on the total weight of the build material, **in that** the organic binder material is at least partially retained in the three-dimensional porous sorbent structure, and **in that** the three-dimensional porous sorbent structure has a sorbent accessibility of at least 40 %, wherein the sorbent accessibility is calculated according to formula (I)

$$sorbent\ accessibility\ (\%) = 100 * \frac{S_{BET,structure}}{X*S_{BET,sorbent}} \qquad (I)$$

   wherein

   $S_{BET,structure}$ is the BET surface area of the three-dimensional porous sorbent structure,
   $S_{BET,sorbent}$ is the BET surface area of the initial inorganic porous sorbent material,
   X is the percentage in weight of the inorganic porous sorbent material, based on the total weight of the three-dimensional porous sorbent structure,
   and wherein the BET surface areas of the initial inorganic porous sorbent material and of the three-dimensional porous sorbent structure are determined from argon adsorption isotherms at 87 K.

2. Method according to claim 1, wherein phase inversion is induced by immersing the three-dimensional porous green body in the non-solvent and/or by atomising the non-solvent onto the three-dimensional porous green body.

3. Method according to any one of the preceding claims, wherein the drying is performed at a temperature between 20 °C and the maximum continued service temperature of the organic binder material, as defined by Underwriter Laboratory (UL) Relative Thermal Index (RTI), preferably at a temperature between 20 °C and 180 °C, more preferably between 20 °C and 150 °C.

4. Method according to any one of the preceding claims, wherein the three-dimensional porous green body and the three-dimensional porous sorbent structure are not exposed to temperatures above the maximum continued service temperature of the organic binder material, as defined by Underwriter Laboratory (UL) Relative Thermal Index (RTI), preferably 180 °C.

5. Method according to any one of the preceding claims, wherein the three-dimensional porous sorbent structure is not subjected to any one of calcining and sintering operations.

6. Method according to any one of the preceding claims, wherein the inorganic porous sorbent material comprises one or more of a zeolite sorbent material, a metal organic framework (MOF) sorbent material, a metal oxide, a carbon-based material, a clay, a molecular sieve, a resin or a MXene.

7. Method according to claim 6, wherein the inorganic porous sorbent material further comprises a catalytically active material provided on a surface of the inorganic porous sorbent material, preferably wherein the catalytically active material comprises an enzyme and/or a micro-organism.

8. Method according to any one of the preceding claims, wherein the organic binder material comprises one or more of a polysulphone, a polyethersulphone, cellulose acetate, a polyvinylidenefluoride, a polyacrylonitrile, a polyethylene-co-vinylalcohol, or a polycarbonate.

9. Method according to any one of the preceding claims, wherein the solvent comprises a polar aprotic solvent, preferably N-methyl-2-pyrrolidone (NMP), acetone, dimethyl-acetamide (DMAc), dimethylformamide (DMF), dimethylsulphoxide (DMSO), tetrahydrofurane (THF), or a combination of two or more thereof.

10. Method according to any one of the preceding claims, wherein the non-solvent comprises a polar protic solvent, preferably water, an alcohol, an acid, or combinations thereof.

11. Three-dimensional porous sorbent structure comprising at least 50 % by weight of an inorganic porous sorbent material and 50 % by weight or less of an organic binder material, based on the total weight of the three-dimensional porous sorbent structure, **characterised in that** the three-dimensional porous sorbent structure has a sorbent accessibility of at least 40 %, wherein the sorbent accessibility is calculated according to formula (I)

$$sorbent\ accessibility\ (\%) = 100 * \frac{S_{BET,structure}}{X * S_{BET,sorbent}} \qquad (I)$$

wherein

$S_{BET,structure}$ is the BET surface area of the three-dimensional porous sorbent structure,
$S_{BET,sorbent}$ is the BET surface area of the initial inorganic porous sorbent material,
X is the percentage in weight of the inorganic porous sorbent material, based on the total weight of the three-dimensional porous sorbent structure,
and wherein the BET surface areas of the initial inorganic porous sorbent material and of the three-dimensional porous sorbent structure are determined from argon adsorption isotherms at 87 K.

12. Three-dimensional porous sorbent structure according to claim 11, comprising between 70 % and 98 % by weight of the inorganic porous sorbent material and between 2 % and 30 % by weight of the organic binder material.

13. Three-dimensional porous sorbent structure according to claim 11 or 12, having a microporous volume of at least 30 % of a microporous volume of the initial inorganic porous sorbent material, wherein the microporous volume is determined by means of the t-plot method on the argon adsorption isotherms at 87 K of the initial inorganic porous sorbent material and of the three-dimensional porous sorbent structure.

14. Use of the three-dimensional porous sorbent structure according to any one of claims 11 to 13, for gas sorption applications and/or liquid sorption applications, in particular for sorption of one or more of $CO_2$, volatile organic compounds, sulphur oxides and nitrogen oxides.

15. Use according to claim 14, wherein the three-dimensional porous sorbent structure is not exposed to temperatures above the maximum continued service temperature of the organic binder material, as defined by Underwriter Laboratory (UL) Relative Thermal Index (RTI), preferably 180°C.

FIG. 1

FIG. 2

| det | mode | HV | mag | HW | WD | | 20 µm |
| ETD | SE | 5.00 kV | 2 500 x | 50.8 µm | 6.2 mm | | |

**FIG. 3A**

| det | mode | HV | mag | HW | WD | | 20 µm |
| ETD | SE | 5.00 kV | 2 500 x | 50.8 µm | 4.5 mm | | |

**FIG. 3B**

| det | mode | HV | mag | HW | WD | | 20 µm |
|---|---|---|---|---|---|---|---|
| ETD | SE | 5.00 kV | 2 500 x | 50.8 µm | 6.9 mm | | |

**FIG. 4A**

| det | mode | HV | mag | HW | WD | | 20 µm |
|---|---|---|---|---|---|---|---|
| ETD | SE | 5.00 kV | 2 500 x | 50.8 µm | 6.0 mm | | |

**FIG. 4B**

| det | mode | HV | mag | HW | WD | | 20 µm |
| CBS | All | 5.00 kV | 2 500 x | 50.8 µm | 7.4 mm | | |

FIG. 5A

| det | mode | HV | mag | HW | WD | | 20 µm |
| CBS | All | 5.00 kV | 2 500 x | 50.8 µm | 5.5 mm | | |

FIG. 5B

FIG. 6

FIG. 7

FIG. 8

FIG. 9

FIG. 10

FIG. 11

**FIG. 12**

**FIG. 13**

FIG. 14

FIG. 15

**FIG. 16**

**FIG. 17**

FIG. 18

Europäisches
Patentamt

European
Patent Office

Office européen
des brevets

# EUROPEAN SEARCH REPORT

**Application Number**

EP 22 19 4579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EVANS KENT A. ET AL: "Chemically Active, Porous 3D-Printed Thermoplastic Composites", APPLIED MATERIALS & INTERFACES, vol. 10, no. 17, 31 January 2018 (2018-01-31), pages 15112-15121, XP93022226, US ISSN: 1944-8244, DOI: 10.1021/acsami.7b17565 Retrieved from the Internet: URL:https://pubs.acs.org/doi/pdf/10.1021/acsami.7b17565> * on pages 15113-15114 under the headings of preparation of Semiflex/ZIF-8 Composites and Filament Extrusion and 3D Printing; page 15115 right hand side; figures 1, 2 and the abstract * | 1-10 | INV. B01J20/02 |
| X | US 2022/250029 A1 (REZAEI FATEME [US] ET AL) 11 August 2022 (2022-08-11) * [0063]-[0065]; paragraph [0042] - paragraph [0053]; examples 1,2 * | 11-15 | |
| | | | **TECHNICAL FIELDS SEARCHED (IPC)** |
| A | LAWSON SHANE ET AL: "Binderless zeolite monoliths production with sacrificial biopolymers", CHEMICAL ENGENEERING JOURNAL, ELSEVIER, AMSTERDAM, NL, vol. 407, 8 December 2020 (2020-12-08), XP086432672, ISSN: 1385-8947, DOI: 10.1016/J.CEJ.2020.128011 [retrieved on 2020-12-08] * under point 2.2; page 2; tables 1,2 * | 1-15 | B01J B01D B29C |

-/--

The present search report has been drawn up for all claims

| Place of search | Date of completion of the search | Examiner |
|---|---|---|
| The Hague | 9 February 2023 | Mc Donnell, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**
Europäisches Patentamt
European Patent Office
Office européen des brevets

## EUROPEAN SEARCH REPORT

Application Number

EP 22 19 4579

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 532 340 B2 (ARKEMA INC [US]) 14 January 2020 (2020-01-14) * example 6 * | 1-15 | |
| A | FONSECA JAVIER ET AL: "Fabrication of metal-organic framework architectures with macroscopic size: A review", COORDINATION CHEMISTRY REVIEWS, ELSEVIER SCIENCE, AMSTERDAM, NL, vol. 462, 22 March 2022 (2022-03-22), XP087016228, ISSN: 0010-8545, DOI: 10.1016/J.CCR.2022.214520 [retrieved on 2022-03-22] * the whole document * | 1-15 | |

TECHNICAL FIELDS SEARCHED (IPC)

The present search report has been drawn up for all claims

| Place of search | Date of completion of the search | Examiner |
|---|---|---|
| The Hague | 9 February 2023 | Mc Donnell, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 4579

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2023

| Patent document cited in search report | | Publication date | Patent family member(s) | | Publication date |
|---|---|---|---|---|---|
| US 2022250029 | A1 | 11-08-2022 | US 2019083954 | A1 | 21-03-2019 |
| | | | US 2022250029 | A1 | 11-08-2022 |
| US 10532340 | B2 | 14-01-2020 | US 2018318789 | A1 | 08-11-2018 |
| | | | US 2019299190 | A1 | 03-10-2019 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009027525 A

**Non-patent literature cited in the description**

- **MICHIELSEN, B. ; MERTENS, M. et al.** Robocasting of porous alumina hollow fibre monoliths by non-solvent induced phase inversion. *Open Ceramics,* 2021, 6

- **THAKKAR, H. ; LAWSON, S. et al.** Development of 3D-printed polymer-zeolite composite monoliths for gas separation. *Chemical Engineering Journal,* 2018, vol. 348, 109-116